# EUROPÄISCHE PATENTANMELDUNG

(11) **EP 0 949 502 A2**
(43) Veröffentlichungstag der Anmeldung: **13.10.1999**
(21) Anmeldenummer: 98123363.8
(22) Anmeldetag: 08.12.1998
(51) Int. Cl.: G01N 21/64

(54) **Vorrichtung zum Nachweis eines Fluoreszenzfarbstoffs**

(30) Priorität: 23.03.1998 DE 19812681
(71) Anmelder: BODENSEEWERK PERKIN-ELMER GMBH, D-88662 Überlingen (DE)
(72) Erfinder: Wulf, Jürgen Dr., 88662 Überlingen (DE)
(74) Vertreter: Grünecker, Kinkeldey, Stockmair & Schwanhäusser Anwaltssozietät

(57) **Zusammenfassung**

Die Erfindung betrifft eine Vorrichtung (100) zum Nachweis eines Fluorenszenzfarbstoffs (F) in einer Probe (P), mit einer Einrichtung (110) zum Anregen des nachzuweisenden Fluoreszenzfarbstoffs (F), die eine Lichteinkopplungseinrichtung (111), durch welche Licht zum Anregen des Fluoreszenzfarbstoffs (F) in die Einrichtung (110) einkoppelbar ist, und eine zum Aufbringen der Probe (P) vorgesehene Oberfläche (112) aufweist, und mit einer Einrichtung (120) zum Detektieren von Fluoreszenzstrahlung, die durch den nachzuweisenden Fluoreszenzfarbstoff emittiert worden ist. Diese Vorrichtung zeichnet sich insbesondere aus durch einen Hohlraum (130) der eine hochreflektive innere Oberfläche (131), eine erste, der Einrichtung (110) zum Anregen des nachzuweisenden Fluoreszenzfarbstoffs (F) gegenüberliegende Öffnung (132) und eine zweite, der Einrichtung (120) zum Detektieren gegenüberliegende Öffnung (133) aufweist.

## Beschreibung

Die Erfindung betrifft eine Vorrichtung zum Nachweis eines Fluoreszenzfarbstoffs in einer Probe mit einer Einrichtung zum Anregen des nachzuweisenden Fluoreszenzfarbstoffs, die eine Lichteinkopplungseinrichtung, durch welche Licht zum Anregen des Fluoreszenzfarbstoffs in die Einrichtung einkoppelbar ist, und eine zum Aufbringen der Probe vorgesehene Oberfläche aufweist, und mit einer Einrichtung zum Detektieren von Fluoreszenzstrahlung, die durch den nachzuweisendes Fluoreszenzfarbstoff emittiert worden ist.

Eine derartige Vorrichtung ist aus dem Artikel "A Planar Indium Phosphate Monomode Waveguide Evanescent Field Immunosensor" von A.N. Sloper, J.K. Deacon und M.T. Flanagan, in Sensors and Actuators, B1(1990), Seiten 589-591, bekannt.

Insbesondere ist in diesem Artikel eine erste Ausführungsform offenbart, in welcher ein Dünnfilm-Wellenleiter auf einem Glassubstrat vorgesehen ist. Durch eine Lichteinkopplungseinrichtung wird monochromatisches Laserlicht in den Dünnfilm-Wellenleiter so eingekoppelt, daß es parallel zur Oberfläche des Dünnfilm-Wellenleiters durch denselben geleitet wird. Fluoreszenzfarbstoff, der in einer auf dem Wellenleiter aufgebrachten Probe enthalten ist, wird durch das evaneszente Feld der sich entlang des Dünnfilm-Wellenleiters bewegenden Laserstrahlung angeregt. Die durch die Abregung des Fluoreszenzfarbstoff emittierte Fluoreszenzstrahlung wird schließlich mit einer Photomultipliereinrichtung nachgewiesen.

Weiterhin offenbart dieser Artikel eine zweite Ausführungsform der oben beschriebenen Vorrichtung, in welcher die Einrichtung zum Anregen des nachzuweisenden Fluoreszenzfarbstoffs in Form einer Glasplatte mit einer Lichteinkopplungseinrichtung vorgesehen ist, wobei monochromatisches Laserlicht durch die Lichteinkopplungseinrichtung so in die Glasplatte eingekoppelt wird, daß es unter Totalreflexion durch die Glasplatte geleitet wird.

Wie im Fall des Dünnfilm-Wellenleiters wird auch in dieser Ausführungsform ein Fluoreszenzfarbstoff, der in einer auf der Glasplatte aufgebrachten Probe enthalten ist, durch das evaneszente Feld der Laserstrahlung angeregt. Die aus dieser Anregung resultierende Fluoreszenzstrahlung wird schließlich wiederum durch eine Photomultipliereinrichtung nachgewiesen.

Ein Nachteil beider aus dem Stand der Technik bekannter Ausführungsformen liegt allerdings darin, daß die Fluoreszenzstrahlung, die keine Vorzugsrichtung aufweist und daher in den gesamten Raumwinkel abgestrahlt wird, nur aus einem kleinen Raumwinkelbereich nachgewiesen werden kann. Folglich zeigen die bekannten Vorrichtungen nur eine sehr kleine Nachweiswahrscheinlichkeit.

Angesichts dieses Nachteils der Vorrichtungen gemäß dem Stand der Technik liegt der Erfindung die Aufgabe zugrunde, die bekannte Vorrichtung zum Nachweis eines Fluoreszenzfarbstoffs dahingehend zu verbessern, daß ihre Nachweiswahrscheinlichkeit erhöht wird.

Diese Aufgabe wird durch eine Vorrichtung der eingangs genannten Art gelöst, die sich auszeichnet durch einen Hohlraum, der eine hochreflektive innere Oberfläche, eine erste, der Einrichtung zum Anregen des nachzuweisenden Fluoreszenzfarbstoffs gegenüberliegende Öffnung und eine zweite, der Einrichtung zum Detektieren gegenüberliegende Öffnung aufweist.

Dadurch, daß die Einrichtung zum Anregen des nachzuweisenden Fluoreszenzfarbstoffs, auf deren Oberfläche die Probe aufgebracht ist, der ersten Öffnung des Hohlraums gegenüberliegt, wird nahezu die Hälfte der emittierten Fluoreszenzstrahlung in den Hohlraum eingestrahlt. Da der Hohlraum weiterhin eine hochreflektive innere Oberfläche aufweist, kann die in den Hohlraum eingestrahlte Strahlung dort nahezu verlustfrei ausbreiten, bis sie von einem Detektor nachgewiesen wird.

Demnach ist es möglich, die Fluoreszenzstrahlung aus einem Raumwinkel von nahezu 2π Steradien nachzuweisen, wodurch die Nachweisempfindlichkeit der Vorrichtung gegenüber den bekannten Vorrichtungen stark erhöht wird.

Gemäß einer bevorzugten Ausgestaltung der Erfindung umfaßt die hochreflektive Oberfläche Bariumsulfat oder Spektralon. Derartige Oberflächen weisen eine Reflektivität von bis zu 99,8 % auf. Demnach können die Reflexionsverluste in dem Hohlraum sehr klein gehalten werden.

Gemäß einer weiteren bevorzugten Ausgestaltung der vorliegenden Erfindung können weitere Einrichtungen zum Detektieren in entsprechenden, jeder weiteren Einrichtung zum Detektieren gegenüberliegenden Öffnungen in dem Hohlraum vorgesehen sein.

Demnach ist eine simultane Erfassung von Signalen mittels mehrerer Detektoren möglich.

Diese weiteren Einrichtungen können zum Detektieren von Fluoreszenzstrahlung vorgesehen werden, die von verschiedenen Anregungsniveaus des nachzuweisenden Fluoreszenzfarbstoffs resultieren und demnach verschiedene Wellenlängen aufweisen.

Somit gestattet diese Anordnung die Messung eines Farbstoffs bei einer Anregungswellenlänge, aber gleichzeitig bei verschiedenen Wellenlängen der Fluoreszenzstrahlung. Da derartige gleichzeitige Messungen der Fluoreszenzstrahlung bei verschiedenen Wellenlängen mit den bekannten Vorrichtungen nicht möglich sind, kann gemäß der Erfindung die Zeit zur Durchführung der Messung der Fluoreszenzstrahlung mit verschiedenen Wellenlängen um einen Faktor N verringert werden, wenn N die Anzahl der verschiedenen Wellenlängen der Fluoreszenzstrahlung bezeichnet.

Weiterhin können gemäß dieser bevorzugten Weiterbildung die weiteren Einrichtungen zum Detektieren zum gleichzeitigen Nachweis weiterer Fluoreszenzfarbstoffe verwendet werden.

Demnach ist es möglich, mit verschiedenen Anregungswellenlängen die Fluoreszenzstrahlung verschiedener Fluoreszenzfarbstoffe gleichzeitig zu messen. Ebenso wie in der Anordnung zur Messung der Fluoreszenzstrahlung bei verschiedenen Wellenlängen eines Fluoreszenzfarbstoffs ergibt sich auch in dem Fall der Messung mehrerer Fluoreszenzfarbstoffe eine Verringerung der Meßzeit mit einem Faktor N, wenn mit N die Anzahl der gleichzeitig nachzuweisenden Fluoreszenzfarbstoffe bezeichnet ist.

Gemäß einer weiteren bevorzugten Ausbildung ist eine Kombination der beiden oben bezeichneten Messungen möglich. Demnach kann die Fluoreszenzstrahlung mehrerer Fluoreszenzfarbstoffe bei jeweils verschiedenen Wellenlängen nachgewiesen werden.

Gemäß einer weiteren bevorzugten Ausgestaltung sind die Einrichtungen zum Detektieren lichtdicht in ihren entsprechenden Öffnungen in dem Hohlraum vorgesehen.

Hierdurch kann vermieden werden, daß Fremdlicht in den Hohlraum eintritt.

Gemäß einer bevorzugten Weiterbildung kann jede Einrichtung zum Detektieren eine Photomultipliereinrichtung aufweisen.

Weiterhin kann jede Einrichtung zum Detektieren eine Farbfiltereinrichtung umfassen, die auf die Wellenlänge der von ihr nachzuweisenden Fluoreszenzstrahlung abgestimmt ist.

Bei Bedarf kann jede Einrichtung zum Detektieren mit einer Kollimationsoptik versehen werden.

Gemäß einer weiteren bevorzugten Ausbildung kann vor der ersten Öffnung des Hohlraums eine Sperrfiltereinrichtung vorgesehen werden, die das zur Anregung verwendete Licht sperrt und die zu detektierende Fluoreszenzstrahlung hindurchläßt. Durch diese Maßnahme kann vermieden werden, daß das zur Anregung verwendete Laserlicht, beispielsweise durch die unvermeidliche Mikrorauhigkeit der Glasoberfläche, in den Hohlraum gestreut wird und dort die Detektion der Fluoreszenzstrahlung ungünstig überlagert.

Vorteilhafterweise kann eine derartige Sperrfiltereinrichtung durch ein im Stand der Technik bekanntes Interferenzfilter realisiert werden.

Dieses Filter kann gemäß einer bevorzugten Ausgestaltung gegenüber der Einrichtung zum Anregen des nachzuweisenden Fluoreszenzfarbstoffs geneigt sein.

Hierdurch kann vermieden werden, daß gesperrtes Laserlicht auf die Probe zurückreflektiert wird.

Gemäß einer weiteren bevorzugten Ausgestaltung kann die Einrichtung zum Anregen des nachzuweisenden Fluoreszenzfarbstoffs bzw. nachzuweisenden Fluoreszenzfarbstoffe in Form einer Glasplatte, die insbesondere einen relativ hohen Brechungsindex, insbesondere von n >1,46 aufweist, wie beispielsweise Pyrexglas oder synthetischer Quarz, vorgesehen werden.

Wenn in diesem Fall die Lichteinkopplungseinrichtung in Form eines optisch dicht auf der Glasplatte aufliegenden Prismas oder in Form eines Gitterkopplers vorgesehen ist, kann durch die Lichtkopplungseinrichtung das Licht zur Anregung des Fluoreszenzfarbstoffs bzw. der Fluoreszenzfarbstoffe so in die Glasplatte eingekoppelt werden, daß es unter Totalreflexion durch die Glasplatte geleitet wird.

Gemäß einer alternativen Weiterbildung kann die Einrichtung zum Anregen des nachzuweisenden Fluoreszenzfarbstoffs bzw. nachzuweisenden Fluoreszenzfarbstoffe in Form eines Dünnfilm-Wellenleiters ausgebildet sein.

Dieser Dünnfilm-Wellenleiter kann beispielsweise Ta₂O₅ umfassen.

Gemäß einer bevorzugten Ausgestaltung kann die Lichteinkopplungseinrichtung einen Gitterkoppler aufweisen, der das Licht zur Anregung des nachzuweisenden Fluoreszenzfarbstoffs bzw. der nachzuweisenden Fluoreszenzfarbstoffe so in den Dünnfilm-Wellenleiter einkoppelt, daß es parallel zur Oberfläche des Dünnfilm-Wellenleiters durch diesen geleitet wird.

Gemäß einer bevorzugten Ausgestaltung kann in allen zuvor ausgebildeten Anordnungen eine Lichtauskopplungseinrichtung für das in die Einrichtung zum Anregen des nachzuweisenden Fluoreszenzfarbstoffs bzw. der nachzuweisenden Fluoreszenzfarbstoffe eingekoppelte Licht vorgesehen sein.

Hierdurch kann vermieden werden, daß Licht unkontrolliert in der Glasplatte bzw. dem Dünnfilm-Wellenleiter zurückreflektiert wird.

Im Fall der Glasplatte kann die Lichtauskopplungseinrichtung durch einen Schliff der der Lichteinkopplungseinrichtung gegenüberliegenden Endfläche der Glasplatte vorgesehen sein.

Im Fall des Dünnfilm-Wellenleiters kann das eingekoppelte Licht vorteilhafterweise durch einen Gitterkoppler ausgekoppelt werden.

Damit wird eine spektrale Analyse des in die Anregungseinrichtung rückemittierten Lichts, beispielsweise mit einer Diodenzeile bzw. einer CCD-Zeile, möglich.

Darüber hinaus kann das ausgekoppelte Licht in einer Lichtfalle aufgefangen werden, so daß ein unkontrollierter Wiedereintritt in die Einrichtung zum Anregen des nachzuweisenden Fluoreszenzfarbstoffs bzw. der nachzuweisenden Fluoreszenzfarbstoffe vermieden wird.

Weitere Vorteile und Merkmale der Erfindung ergeben sich aus der folgenden beispielhaften Beschreibung bevorzugter Ausführungsformen der Erfindung unter Bezugnahme auf die Zeichnungen. Es zeigen:
- Fig. 1: ein schematische Darstellung einer ersten Ausführungsform der vorliegenden Erfindung;
- Fig. 2: eine schematische Darstellung einer zweiten Ausführungsform der vorliegenden Erfindung;
- Fig. 3: eine schematische Darstellung einer dritten Ausführungsform der vorliegenden Erfindung; und
- Fig. 4: eine schematische Darstellung einer vierten Ausführungsform der vorliegenden Erfindung.

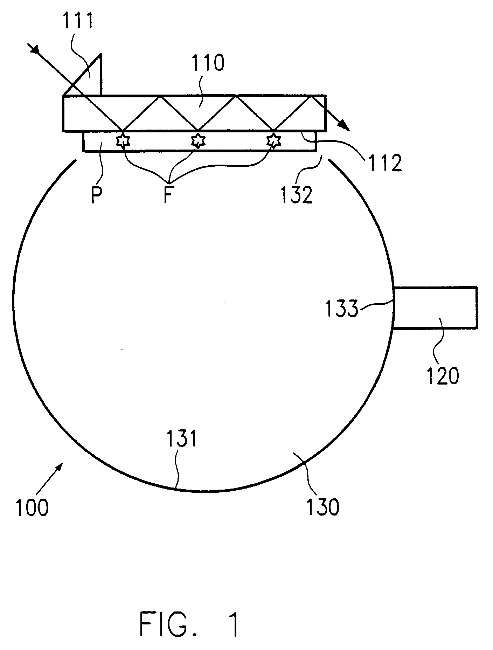

In Fig. 1 ist eine erste Ausführungsform einer Vorrichtung 100 zum Nachweis eines Fluoreszenzfarbstoffs F in einer Probe P gemäß der vorliegenden Erfindung gezeigt.

Die Vorrichtung 100 umfaßt eine Einrichtung zum Anregen des in der Probe P enthaltenen Fluoreszenzfarbstoffs F, die in Form einer Glasplatte 110 vorgesehen ist.

Diese Glasplatte 110 besteht aus einem Glas mit einem relativ hohen Brechungsindex.

Beispielsweise läßt sich für die Glasplatte 110 Pyrexglas mit n = 1,478 oder ein synthetischer Quarz mit n = 1,463 bei λ = 488 nm verwenden.

Die Glasplatte 110 weist eine Lichteinkopplungseinrichtung in Form eines optisch dicht auf der Glasplatte aufliegenden Prismas 111 auf, durch welche Licht zum Anregen des Fluoreszenzfarbstoffs in die Glasplatte 110 einkoppelbar ist.

Außerdem umfaßt die Glasplatte 110 eine Oberfläche 112, auf welche die den nachzuweisenden Fluoreszenzfarbstoff F enthaltende Probe P aufgebracht ist. Der Glasplatte 110 gegenüberliegend ist ein Hohlraum 130, der vorliegend kugelförmig ausgebildet ist, angeordnet, wobei die Oberfläche 112, auf der die Probe aufgebracht ist, in Richtung einer ersten Öffnung 132 des Hohlraums 130 zeigt.

Die Größe des kugelförmigen Hohlraums 130 beträgt in der in Fig. 1 gezeigten Ausführungsform 80 mm.

Der Hohlraum 130 umfaßt eine hochreflektive innere Oberfläche 131, die beispielsweise Bariumsulfat oder Spektralon umfassen. Durch diese spezielle Beschichtung kann eine Reflektivität der inneren Oberfläche von 99,8 % erzielt werden.

Außerdem ist in dem Hohlraum 130 eine zweite Öffnung 133 vorgesehen, in die eine Detektionseinrichtung 120 zum Detektieren von Fluoreszenzstrahlung, die durch den nachzuweisenden Fluoreszenzfarbstoff F emittiert worden ist, beispielsweise eine Photomultipliereinrichtung, eingesetzt.

Im folgenden wird die Funktionsweise der Vorrichtung 100 beschrieben.

Über das Prisma 111 wird beim Betrieb der Vorrichtung Licht, das die Anregungswellenlänge enthält, bzw. monochromatisches Laserlicht der Anregungswellenlänge in die Glasplatte 110 eingekoppelt. In der Glasplatte 110 pflanzt sich das monochromatische Laserlicht durch mehrere Totalreflexionen fort, bis es schließlich an einer dem Prisma 111 gegenüberliegenden Seite aus der Glasplatte 110 austritt.

An den Orten der Totalreflexion des monochromatischen Laserlichts wird das evaneszente Feld der Laserstrahlung zur Anregung des Fluoreszenzfarbstoffs F genützt.

Die von dem angeregten Fluoreszenzfarbstoff abgegebene Fluoreszenzstrahlung wird in den Hohlraum 130 eingestrahlt, und schließlich nach mehreren Totalreflexionen an der hochreflektiven Oberfläche 131 durch den Detektor 120 nachgewiesen.

Da die Probe der Öffnung des Hohlraums 132 unmittelbar gegenüberliegt und außerdem die Fluoreszenzstrahlung im allgemeinen keine Vorzugsrichtung hat, werden in der vorliegenden Anordnung etwa 50 % der Intensität der Fluoreszenzstrahlung in den Hohlraum 130, wo sie schließlich nachgewiesen werden kann, eingestrahlt.

Anders ausgedrückt, wird in der erfindungsgemäßen Vorrichtung die Fluoreszenzstrahlung in dem Hohlraum 130 aus einem Raumwinkel von nahezu 2π Steradien gesammelt und dort detektiert.

Folglich kann in der Vorrichtung 100, im Vergleich zu aus dem Stand der Technik bekannten Vorrichtungen, in denen Linsensysteme oder Lichtleiter mit entsprechenden Detektoren eingesetzt worden sind, der Raumwinkel, auf dem Fluoreszenzstrahlung gesammelt wird, stark erhöht werden, wodurch eine erhöhte Nachweiswahrscheinlichkeit erzielt werden kann.

Die in Fig. 1 gezeigte Vorrichtung 100 kann auf vielfältige Weise verändert werden.

So kann beispielsweise das Prisma 111 durch andere bekannte Lichteinkopplungseinrichtungen, wie beispielsweise durch einen Gitterkoppler ersetztwerden.

Weiterhin kann der Hohlraum 130 auch andere geometrische Formen, wie beispielsweise eine Würfelform oder dergleichen, aufweisen. Im Vergleich zu der in Fig. 1 gezeigten kugelförmigen Anordnung kann sich allerdings die Anzahl der Reflexionen der Fluoreszenzstrahlung in dem Hohlraum bis zum Nachweis durch den Detektor erhöhen, wodurch sich u.U. die Reflexionsverluste in dem Hohlraum erhöhen können.

Der Detektor 120 ist in der vorliegenden Ausführungsform in Form eines Photomultipliers vorgesehen. Vorzugsweise kann vor den Photomultiplier ein Farbfilter gesetzt werden, der auf die von dem nachzuweisenden Fluoreszenzfarbstoff F emittierte Wellenlänge abgestimmt ist.

Falls die Reflexionsverluste in dem Hohlraum 130 weiter reduziert werden sollen, bietet es sich an, den Detektor 120 lichtdicht in die Öffnung 133 einzusetzen.

Weiterhin kann, falls es erforderlich ist, der Detektor mit einer Kollimationsoptik versehen werden.

Während in der im Zusammenhang mit Fig. 1 beschriebenen Ausführungsform lediglich ein monochromatischer Strahl durch die Lichteinkopplungseinrichtung in die Glasplatte eingekoppelt wird, kann die in Fig. 1 gezeigte Vorrichtung auch mit zwei oder mehreren Anregungswellenlängen betrieben werden. Hierzu kann die Anregung in der Frequenzdomäne moduliert werden, und die Fluoreszenzstrahlung mit der jeweiligen Frequenz durch eine entsprechend gesteuerte Detektoreinrichtung detektiert werden.

Um die beschriebene Vorrichtung zum Nachweis von Fluoreszenzstrahlung eines bestimmten Fluoreszenzfarbstoffs einzusetzen, ist lediglich die Anregungslichtquelle und, falls vorgesehen, das Farbfilter vor der Photomultipliereinrichtung an den Fluoreszenzfarbstoff anzupassen.

Beispielsweise zum Nachweis von Fluoreszein, das bei 488 nm zur Fluoreszenz angeregt werden kann, muß Licht dieser Wellenlänge in die Vorrichtung eingestrahlt werden. Da die Fluoreszenzstrahlung bei 520 nm emittiert wird, müßte ein verwendeter Farbfilter in diesem Bereich durchlässig sein und bei 488 nm sperren. Analoges gilt für CY5, das bei 633 nm angeregt werden kann und bei 670 nm Fluoreszenzstrahlung emittiert.

Gemäß Fig. 1 ist die Vorrichtung 100 so angeordnet, daß der Hohlraum 130 unter der Anregungseinrichtung 120 liegt. Die Vorrichtung 100 kann allerdings auch, insbesondere wenn flüssige Proben zu untersuchen sind, so vorgesehen werden, daß der Hohlraum 130 über der Anregungseinrichtung 120 liegt.

Darüber hinaus kann zur Untersuchung flüssiger Proben auch die zu untersuchende Probe in der in Fig. 1 dargestellten Anordnung auf der Glasplatte 120 aufgebracht werden. Die Fluoreszenzstrahlung läuft in diesem Fall durch die Glasplatte hindurch, bevor sie in den Hohlraum eintritt.

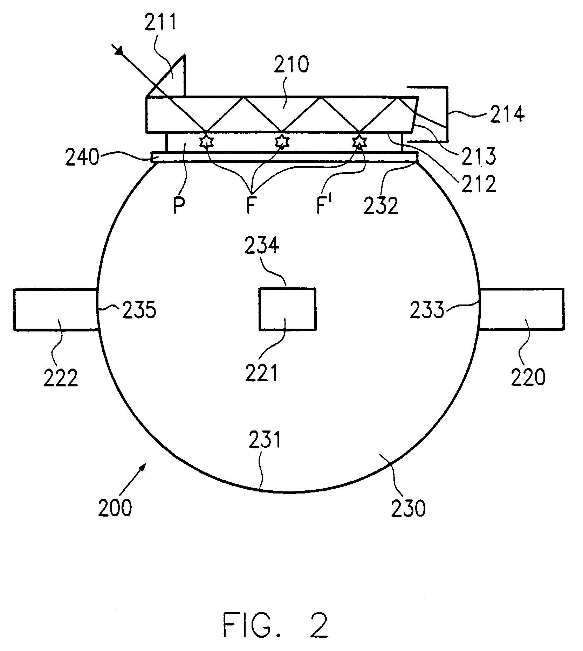

In Fig. 2 ist eine zweite Ausführungsform einer Vorrichtung 200 zum Nachweis eines Fluoreszenzfarbstoffs F in einer Probe P dargestellt.

Diese Vorrichtung unterscheidet sich von der in Fig. 1 gezeigten dadurch, daß zusätzlich zu einer ersten Detektoreinrichtung 220 weitere Detektoreinrichtungen 221 und 222, und ein Sperrfilter 240 vorgesehen sind. Darüber hinaus ist die in Form einer Glasplatte 210 vorgesehene Einrichtung zum Anregen des nachzuweisenden Fluoreszenzfarbstoffs mit einer Lichtauskoppeleinrichtung 213 versehen, an die sich eine Lichtfalle 214 anschließt.

Um Wiederholungen zu vermeiden, werden im folgenden lediglich diese unterschiedlichen Merkmale erläutert und in bezug auf die verbleibenden Komponenten wird lediglich auf die Beschreibung im Zusammenhang mit Fig. 1 verwiesen. In diesem Zusammenhang bleibt anzumerken, daß sich die Bezugszeichen der einander entsprechenden Komponenten lediglich in ihrer ersten Ziffer unterscheiden.

Wie in Fig. 2 gezeigt, umfaßt die Lichtplatte 210 eine Auskoppeleinrichtung 213, die durch einen Schliff der Endfläche der Glasplatte 210, die der Lichteinkopplungseinrichtung 211 gegenüberliegt, vorgesehen ist. Der Winkel des Schliffs 213 in bezug auf die Oberfläche 212 der Glasplatte wird hierbei so gewählt, daß das Licht aus der Glasplatte 210 ungehindert, beispielsweise senkrecht, austreten kann. Hierdurch wird vermieden, daß Licht, das die Glasplatte bereits durchlaufen hat, wieder in die Glasplatte 210 zurückreflektiert wird und dadurch zu einer unkontrollierten Anregung des Fluoreszenzfarbstoffs führt.

Gemäß Fig. 2 ist weiterhin eine Lichtfalle 214 vorgesehen, die verhindert, daß Licht, welches bereits aus der Glasplatte 210 ausgetreten ist, wieder in die Glasplatte 210 eintritt und dadurch zu einer unkontrollierten Anregung des Fluoreszenzfarbstoffs führt.

Weiterhin ist in der zweiten Ausführungsform zwischen der Glasplatte 210, auf welche die Probe P aufgebracht worden ist, und der Öffnung 232 des Hohlraums 230 eine Sperrfiltereinrichtung 240 vorgesehen. Diese Sperrfiltereinrichtung 240 ist für das zur Anregung verwendete Licht, das durch die unvermeidliche Mikrorauhigkeit der Glasoberfläche oder Staub auf der Glasoberfläche bzw. Fehlstellen im Glaskörper in Richtung des Hohlraums gestreut wird, undurchlässig und für die zu detektierende Fluoreszenzstrahlung durchlässig ist.

Durch diese Sperrfiltereinrichtung kann selbst der Anteil der Laserstrahlung, der nicht aufgrund der Totalreflexionen in der Glasplatte von der Detektoreinrichtung getrennt wird, absorbiert oder reflektiert werden, so daß nur die Strahlung, die durch den Fluoreszenzfarbstoff F emittiert worden ist, in den Hohlraum gestrahlt wird.

Bei mehrfarbiger Anregung muß das Sperrfilter zwei Sperrbereiche und zwei Durchlaßbereiche aufweisen.

In der zweiten Ausführungsform sind weiterhin zwei Detektoren 221 und 222, die in entsprechenden Öffnungen 234 bzw. 235 in dem Hohlraum 230 eingesetzt sind, vorgesehen.

Die Detektoren 221 und 222 können baugleich mit dem Detektor 220 ausgebildet sein oder speziell an eine Floureszenzstrahlung angepaßt werden, die sich in ihrer Wellenlänge von der mit der Detektoreinrichtung 220 nachzuweisenden Floureszenzstrahlung unterscheidet.

Obwohl in der Ausführungsform gemäß Fig. 2 nur drei Detektionseinrichtungen 220, 221 und 222 gezeigt sind, ist es offensichtlich, daß weitere Detektoreinrichtungen vorgesehen werden können.

Mit dieser Anordnung ist es einerseits möglich, Fluoreszenzstrahlung von dem gleichen Fluoreszenzfarbstoff F, die aus unterschiedlichen Anregungszuständen resultiert, nachzuweisen.

Außerdem können die Detektoreinrichtungen auch so vorgesehen werden, daß sie zum gleichzeitigen Nachweis wenigstens eines weiteren Fluoreszenzfarbstoffs F' vorgesehen sind. Hierzu kann es u.U. erforderlich sein, daß Licht mit verschiedenen Anregungswellenlängen über die Einkopplungseinrichtung 211 in die Glasplatte 210 eingekoppelt wird.

Selbstverständlich sind auch beliebige Kombinationen aus den beiden oben beschriebenen Betriebsverfahren möglich; d.h. mit dieser Anordnung kann die Floureszenzstrahlung mehrerer Fluoreszenzfarbstoffe F und F' mit jeweils verschiedenen Wellenlängen detektiert werden.

Obwohl in der zweiten Ausführungsform die Auskopplungseinrichtung 213, die Lichtfalle 214, die Sperrfiltereinrichtung 240 und die zusätzlichen Detektionseinrichtungen 221 und 222 gemeinsam gezeigt worden sind, bleibt anzumerken, daß diese Merkmale voneinander unabhängig sind und demnach jedes einzelne dieser Merkmale bei Bedarf eingesetzt werden kann, um die im Zusammenhang mit dem betreffenden Merkmal beschriebenen Vorteile zu erlangen.

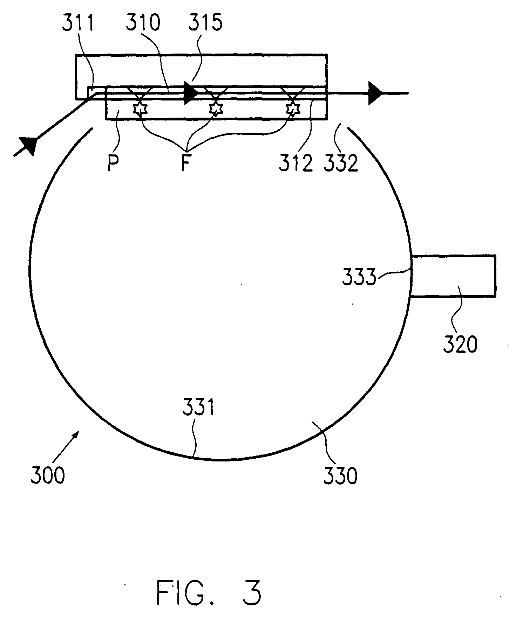

In Fig. 3 ist eine dritte Ausführungsform einer Vorrichtung 300 zum Nachweis eines Fluoreszenzfarbstoffs F in einer Probe P dargestellt.

Diese Vorrichtung unterscheidet sich von den in Fig. 1 gezeigten dadurch, daß anstelle der Glasplatte 110 ein auf einem Substrat 315 vorgesehener Dünnfilm-Wellenleiter 310 verwendet wird, auf dessen Oberfläche die nachzuweisende Probe P mit dem Fluoreszenzfarbstoff F aufgebracht ist. Außerdem wird anstelle des Prismas 111 ein Gitterkoppler 311 zum Einkoppeln des Anregungslichts in dem Dünnfilm-Wellenleiter 310 verwendet.

Abgesehen von dieser Einrichtung 310 zum Anregen des nachzuweisenden Fluoreszenzfarbstoffs umfaßt die in Fig. 3 gezeigte Vorrichtung dieselben Merkmale wie die in Fig. 1 dargestellte erste Ausführungsform. Um Wiederholungen zu vermeiden, wird in bezug auf diese Komponenten deshalb lediglich auf die Beschreibung im Zusammenhang mit Fig. 1 verwiesen, wobei anzumerken bleibt, daß sich die Bezugszeichen der einander entsprechenden Komponenten lediglich in ihrer ersten Ziffer unterscheiden.

Durch eine Lichteinkopplungseinrichtung wird Licht, das die Anregungswellenlänge enthält, beispielsweise monochromatisches Laserlicht, in den Dünnfilm-Wellenleiter 310 so eingekoppelt, daß es parallel zur Oberfläche des Dünnfilm-Wellenleiters 310 durch denselben geleitet wird. Fluoreszenzfarbstoff F, der in einer auf dem Wellenleiter aufgebrachten Probe P enthalten ist, wird durch das evaneszente Feld der sich entlang des Dünnfilm-Wellenleiters 310 bewegenden Laserstrahlung angeregt. Die durch den Fluoreszenzfarbstoff F emittierte Fluoreszenzstrahlung wird schließlich in einen Hohlraum 330 gestrahlt wird und dort mit einer Detektoreinrichtung 320 nachgewiesen.

Der Dünnfilm-Wellenleiter 310 kann beispielsweise Ta₂O₅ umfassen. Weiterhin ist es auch zweckmäßig, den Dünnfilm-Wellenleiter in seiner Dicke an die Anregungsstrahlung anzupassen. So hat sich gezeigt, daß ein Dünnfilm-Wellenleiter aus Ta₂O₃ mit n = 2,1 und einer Dicke von 100 nm für Argonlaserlicht mit λ = 488 nm gute Ergebnisse liefert.

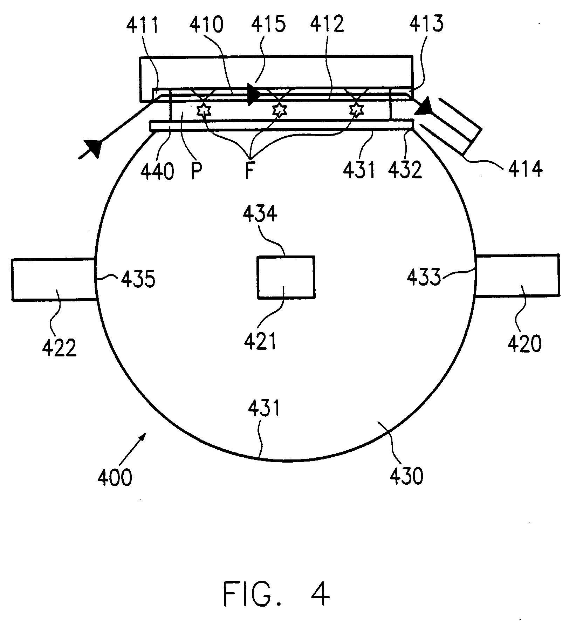

In Fig. 4 ist eine vierte Ausführungsform einer Vorrichtung 400 zum Nachweis eines Fluoreszenzfarbstoffs F in einer Probe P dargestellt.

Wie in der Ausführungsform gemäß Fig. 3 wird in dieser Vorrichtung ebenfalls ein Dünnfilm-Wellenleiter 410, der auf einem Substrat 415 vorgesehen ist, verwendet.

Das zur Anregung des Fluoreszenzfarbstoffs zu verwendende Licht wird ebenfalls über einen Gitterkoppler 411 in den Dünnfilm-Wellenleiter eingekoppelt. Im Gegensatz zu dem in Fig. 3 gezeigten Dünnfilm-Wellenleiter 310 umfaßt der in Fig. 4 gezeigte Dünnfilm-Wellenleiter 410 eine Auskopplungseinrichtung 413, die bevorzugt ebenfalls in Form eines Gitterkopplers vorgesehen ist.

Analog zu der in Fig. 2 gezeigten Ausführungsform wird auch in dieser Ausführungsform das ausgekoppelte Licht in eine Lichtfalle 414 geführt, um einen unkontrollierten Eintritt in den Dünnfilm-Wellenleiter zu vermeiden.

Die übrigen in Fig. 4 gezeigten Komponenten entsprechen in ihrer Funktionsweise und Wirkung den in Fig. 2 gezeigten Komponenten. Deshalb wird in bezug auf diese Komponenten lediglich auf die Beschreibung im Zusammenhang mit Fig. 2 verwiesen, wobei anzumerken bleibt, daß sich die Bezugszeichen einander entsprechender Komponenten lediglich in ihrer ersten Ziffer unterscheiden.

## Patentansprüche

1. Vorrichtung (100; 200; 300; 400) zum Nachweis eines Fluorenszenzfarbstoffs (F) in einer Probe (P), mit
einer Einrichtung (110; 210; 310; 410) zum Anregen des nachzuweisenden Fluoreszenzfarbstoffs (F), die eine Lichteinkopplungseinrichtung (111; 211; 311; 411), durch welche Licht zum Anregen des Fluoreszenzfarbstoffs (F) in die Einrichtung (110; 210; 310; 410) einkoppelbar ist, und eine zum Aufbringen der Probe (P) vorgesehene Oberfläche (112; 212; 312; 412) aufweist, und
einer Einrichtung (120; 220; 320; 420) zum Detektieren von Fluoreszenzstrahlung, die durch den nachzuweisenden Fluoreszenzfarbstoff (F) emittiert worden ist,
**gekennzeichnet durch**
einen Hohlraum (130; 230; 330; 430), der eine hochreflektive innere Oberfläche (131; 231; 331; 431), eine erste, der Einrichtung (110; 210; 310; 410) zum Anregen des nachzuweisenden Fluoreszenzfarbstoffs (F) gegenüberliegende Öffnung (132; 232; 332; 432) und eine zweite, der Einrichtung (120; 220; 320; 420) zum Detektieren gegenüberliegende Öffnung (133; 233; 333; 433) aufweist.

2. Vorrichtung nach Anspruch 1, in welcher der Hohlraum (130; 230; 330; 430) im wesentlichen kugelförmig ausgebildet ist.

3. Vorrichtung nach Anspruch 1 oder 2, in welcher die hochreflektive Oberfläche (131; 231; 331; 431) Bariumsulfat oder Spectralon umfaßt.

4. Vorrichtung nach einem der vorangegangenen Ansprüche, in welcher wenigstens eine weitere Einrichtung (221, 222, ...; 421, 422, ...) zum Detektieren und eine entsprechende jeder weiteren Einrichtung zum Detektieren gegenüberliegende Öffnung (234, 235, ...; 434, 435, ...) in dem Hohlraum (230; 430) vorgesehen ist.

5. Vorrichtung nach Anspruch 4, in welcher die wenigstens eine weitere Einrichtung (221, 222; 421, 422) zum Detektieren von Fluoreszenzstrahlung vorgesehen ist, welche durch den nachzuweisenden Fluoreszenzfarbstoff (F) emittiert worden ist und deren Wellenlänge sich von der Fluoreszenzstrahlung, die von der Einrichtung (220; 420) zum Detektieren nachzuweisen ist, unterscheidet.

6. Vorrichtung nach Anspruch 4 oder 5, in welcher die wenigstens eine weitere Einrichtung (221, 222) zum Detektieren zum gleichzeitigen Nachweis wenigstens eines weiteren Fluorenszenzfarbstoffs (F') vorgesehen ist.

7. Vorrichtung nach einem der vorangegangenen Ansprüche, in welcher jede Einrichtung (120; 220, 221, 222; 320; 420, 421, 422) zum Detektieren lichtdicht in der ihr entsprechenden zweiten Öffnung (133; 233, 234, 235; 333; 433, 434, 435) in dem Hohlraum (130; 230; 330; 430) vorgesehen ist.

8. Vorrichtung nach einem der vorangegangenen Ansprüche, in welcherjede Einrichtung (120; 220, 221, 222; 320; 420, 421, 422) zum Detektieren eine Photomultipliereinrichtung aufweist.

9. Vorrichtung nach Anspruch 8, in welcher jede Einrichtung (120; 220, 221, 222; 320; 420, 421, 422) zum Detektieren eine auf die Wellenlänge der von ihr nachzuweisende Fluoreszenzstrahlung abgestimmte Farbfiltereinrichtung aufweist.

10. Vorrichtung nach einem der vorangegangenen Ansprüche, in welcher jede Einrichtung (120; 220, 221, 222; 320; 420, 421, 422) zum Detektieren eine Kollimationsoptik aufweist.

11. Vorrichtung nach einem der vorangegangenen Ansprüche, in welchem vor der ersten Öffnung (231; 431) des Hohlraums (230; 430) eine Sperrfiltereinrichtung (240; 440), die für das zur Anregung verwendete Licht undurchlässig und für die zu detektierende Fluorenszenzstrahlung durchlässig ist, vorgesehen ist.

12. Vorrichtung nach Anspruch 10, in welcher die Sperrfiltereinrichtung (240; 440) ein Interferenzfilter aufweist.

13. Vorrichtung nach Anspruch 11 oder 12, in welcher die Sperrfiltereinrichtung (240; 440) gegenüber der Einrichtung zum Anregen des nachzuweisenden Fluoreszenzfarbstoffs bzw. der nachzuweisenden Fluoreszenzfarbstoffe geneigt ist.

14. Vorrichtung nach einem der vorangegangenen Ansprüche, in welcher die Einrichtung zum Anregen des nachzuweisenden Fluoreszenzfarbstoffs bzw. der nachzuweisenden Fluoreszenzfarbstoffe eine Glasplatte (110; 210) aufweist.

15. Vorrichtung nach Anspruch 14, in welcher die Glasplatte (110; 210) einen relativ hohen Brechungsindex, insbesondere von n >1,46, aufweist.

16. Vorrichtung nach Anspruch 15, in welcher die Glasplatte (110; 210) Pyrexglas oder synthetisches Quarzglas umfaßt.

17. Vorrichtung nach einem der Ansprüche 14 bis 16, in welcher die Lichteinkopplungseinrichtung in Form eines optisch dicht auf der Glasplatte aufliegenden Prismas (111; 211) oder in Form eines Gitterkopplers vorgesehen ist, und durch die Lichteinkopplungseinrichtung das Licht zur Anregung des nachzuweisenden Fluoreszenzfarbstoffs bzw. der nachzuweisenden Fluoreszenzfarbstoffe so in die Glasplatte (110; 210) eingekoppelt wird, daß es unter Totalreflexion durch dieselbe geleitet wird.

18. Vorrichtung nach einem der Ansprüche 1 bis 13, in welcher die Einrichtung zum Anregen des nachzuweisenden Fluoreszenzfarbstoffs bzw. der nachzuweisenden Fluoreszenzfarbstoffe einen auf einem Substrat (315; 415) vorgesehenen Dünnfilm-Wellenleiter (310; 410) aufweist.

19. Vorrichtung nach Anspruch 18, in welcher der Dünnfilm-Wellenleiter (310; 410) Ta₂O₅ umfaßt.

20. Vorrichtung nach einem der Ansprüche 18 oder 19, in welcher die Lichteinkopplungseinrichtung einen Gitterkoppler (311; 411) aufweist, der das Licht zur Anregung des nachzuweisenden Fluoreszenzfarbstoffs bzw. der nachzuweisenden Fluoreszenzfarbstoffe so in den Dünnfilm-Wellenleiter (310; 410) eingekoppelt, daß es parallel zur Oberfläche des Dünnfilm-Wellenleiters (310; 410) durch denselben geleitet wird.

21. Vorrichtung nach einem der vorangegangenen Ansprüche, in welcher eine Lichtauskopplungseinrichtung (213; 413) für das in die Einrichtung (210; 410) zum Anregen des nachzuweisenden Fluoreszenzfarbstoffs bzw. der nachzuweisenden Fluoreszenzfarbstoffe eingekoppelte Licht vorgesehen ist.

22. Vorrichtung nach Anspruch 21 in Verbindung mit einem der Ansprüche 14 bis 17, in welcher die Lichtauskopplungseinrichtung durch einen Schliff (213) der der Lichteinkopplungseinrichtung (211) gegenüberliegenden Endfläche der Glasplatte (210), die vorgesehen ist.

23. Vorrichtung nach Anspruch 21 in Verbindung mit einem der Ansprüche 18 bis 20, in welcher die Lichtauskopplungseinrichtung durch einen Gitterkoppler (413) im Bereich der Endfläche des Dünnfilm-Wellenleiters (410), die der Lichteinkopplungseinrichtung (411) gegenüberliegt, vorgesehen ist.

24. Vorrichtung nach einem der Ansprüche 21 bis 23, in welcher eine Lichtfalle (214; 414) für das aus der Einrichtung (210; 410) zum Anregen des nachzuweisenden Fluoreszenzfarbstoffs bzw. der nachzuweisenden Fluoreszenzfarbstoffe ausgekoppelte Licht vorgesehen ist.
